Europäisches Patentamt

European Patent Office

Office européen des brevets

(19)

(11) Numéro de publication: **0 081 025**
**B1**

(12) # FASCICULE DE BREVET EUROPEEN

(45) Date de publication du fascicule du brevet:
02.04.86

(51) Int. Cl.⁴: **B 62 D 5/00**, B 62 D 5/04

(21) Numéro de dépôt: **81401926.1**

(22) Date de dépôt: **03.12.81**

(54) **Mécanisme d'assistance rotative, notamment pour direction de véhicule.**

(43) Date de publication de la demande:
**15.06.83 Bulletin 83/24**

(45) Mention de la délivrance du brevet:
**02.04.86 Bulletin 86/14**

(84) Etats contractants désignés:
**DE GB IT SE**

(56) Documents cités:
**DE - A - 2 247 135**
**DE - A - 2 817 190**
**FR - A - 1 096 781**
**FR - A - 2 406 557**
**FR - A - 2 417 676**
**FR - E - 92 889**
**US - A - 2 833 154**

(73) Titulaire: **AUTOMOBILES CITROEN, 62 Boulevard Victor-Hugo, F-92200 Neuilly-sur-Seine (FR)**
Titulaire: **AUTOMOBILES PEUGEOT, 75, avenue de la Grande Armée, F-75116 Paris (FR)**

(72) Inventeur: **Barthelemy, André, 52, Route de Limours, F-78470 Saint-Remy-Les Chevreuse (FR)**

(74) Mandataire: **Michardière, Bernard et al, Cabinet Plasseraud 84, rue d'Amsterdam, F-75009 Paris (FR)**

## Description

L'invention est relative à un mécanisme d'assistance rotative propre à être accouplé à un organe récepteur susceptible de trouner alternativement dans les deux sens, en réponse à la rotation d'un arbre de manœuvre, mécanisme du genre de ceux qui comprennent un moteur, des moyens de démultiplication de la vitesse du moteur, et deux embrayages associés, respectivement, à chaque sens de rotation, des moyens de commande des embrayages étant prévus pour mettre en action l'un des embrayages selon le sens et l'amplitude du couple exercé sur l'arbre de manœuvre de telle sorte que l'organe récepteur soit entraîné par le moteur et les moyens de démultiplication dans le sens souhaité, par l'intermédiaire de l'embrayage mis en action. Un tel mécanisme est décrit par exemple dans US-A- 2 833 154.

L'invention concerne plus particulièrement, parce que c'est dans ce cas que son application semble devoir présenter le plus d'intérêt, mais non exclusivement, de tels mécanismes d'assistance rotative pour directions de véhicules automobiles.

L'invention a pour but, surtout, de rendre les mécanismes d'assistance rotative du genre en question tels qu'ils répondent mieux que jusqu'à présent aux diverses exigences de la pratique et notamment tels que leur couple résistant soit réduit lorsque le moteur est arrêté et que l'organe récepteur est entraîné par l'arbre de manœuvre.

Selon l'invention, un mécanisme d'assistance rotative propre à être accouplé à un organe récepteur susceptible de tourner alternativement dans les deux sens, en réponse à la rotation d'un arbre de manœuvre, du genre défini précédemment, est caractérisé par le fait que chaque embrayage est lié en rotation à l'organe récepteur par l'intermédiaire d'un moyen d'accouplement unidirectionnel agencé de manière à assurer l'entraînement en rotation de l'organe récepteur à partir de l'embrayage, mis en action, et non pas l'inverse.

Ainsi, lorsque le moteur électrique est arrêté, il est possible d'entraîner l'organe récepteur par l'arbre de manœuvre, sans entraîner en rotation les moyens de démultiplication, ni le moteur.

Avantageusement, chaque moyen d'accouplement unidirectionnel est formé par une roue libre.

Lorsque le moteur du mécanisme est prévu pour tourner dans les deux sens, les moyens de démultiplication comprennent un seul train d'engrenages qui comporte une roue dentée de sortie coaxiale à l'organe récepteur.

Selon une première possiblilité, cette roue dentée est montée libre en coulissement axial, par rapport au carter, tandis que l'organe récepteur est immobilisé en coulissement axial par rapport à ce carter; les embrayages sont alors prévus de part et d'autre de cette roue dentée et les moyens de commande de l'embrayage sont propres à déplacer axialment cette roue dentée pour assurer la mise en action de l'embrayage approprié.

Les moyens de commande de l'embrayage peuvent comprendre un axe transversal lié en translation axiale à un embout, coaxial à l'organe récepteur, et monté libre en coulissement par rapport à cet organe et par rapport à l'arbre de manœuvre; ledit axe traverse radialement au moins une lumière, en forme de rampe inclinée par rapport à la direction longitudinale, prévue dans l'arbre récepteur, des moyens élastiques de rappel étant en outre prévus entre l'embout et l'organe récepteur, la coopération de l'axe avec la lumière, sous l'effet d'un couple exercé sur l'arbre de manœuvre, provoquant un coulissement axial de la roue dentée, dans le sens approprié.

Selon une deuxième possibilité, la roue dentée peut être immobilisée axialement par rapport au carter tandis que l'organe récepteur est monté avec une possibilité de coulissement axial relativement à ce carter; les moyens de commande de l'embrayage comprennent alors des moyens d'engrenage prévus entre l'organe récepteur et un organe á commander, propres á créer une réaction axiale, en réponse à l'exercice d'un couple, cette réaction axiale provoquant un déplacement de l'organe récepteur; la roue dentée est montée libre en rotation sur l'organe récepteur tandis que chaque embrayage comprend un plateau récepteur lié en translation à l'organe récepteur et lié en rotation à cet organe par l'intermédiaire d'un moyen d'accouplement unidirectionnel; lors de son déplacement axial, l'organe récepteur entraîne au moins un plateau récepteur et met en action l'embrayage associé.

De préférence, la roue dentée est creuse et est réalisée en deux parties réunies par des moyens d'assemblage démontables.

Lorsque le moteur est prévu pour tourner dans un seul sens, les moyens de démultiplication comprennent deux trains d'engrenages, dont l'un comporte un pignon de plus que l'autre de manière à assurer, à sa sortie, un sens de rotation inverse de celui de la sortie de l'autre train; un embrayage est alors associé à chaque pignon ou roue dentée de sortie d'un train d'engrenages.

L'invention consiste, mises à part les dispositions exposées ci-dessus, en certaines autres dispositions dont il sera plus explicitement question ci-après à propos de modes de réalisation particuliers décrits avec référence aux dessins ci-annexés, mais qui net sont nullement limitatifs.

La figure 1 de ces dessins est une coupe axiale avec parties en extérieur et parties arrachées, d'un mécanisme d'assistance conforme à l'invention.

La figure 2 est une vue partielle, en plan, d'un détail de la figure 1.

La figure 3 montre une variante de réalisation du mécanisme de l'invention.

La figure 4, enfin, est une demi-vue en élévation, des roues libres travaillant dans des sens de rotation opposés.

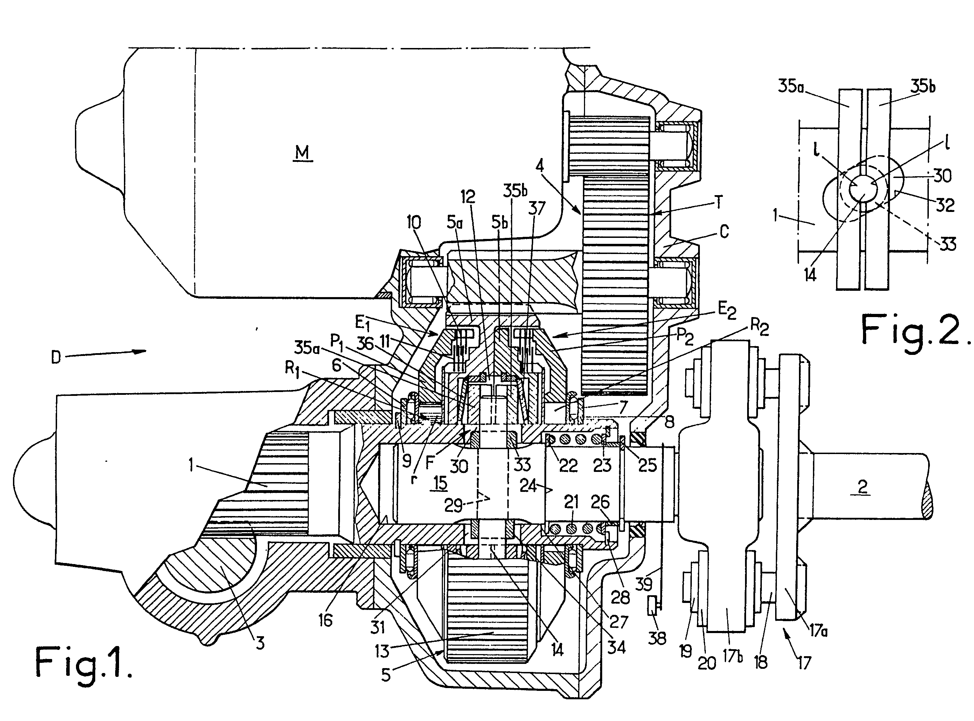

En se reportant à la figure 1, on peut voir un mécanisme d'assistance rotative D propre à être accouplé à un organe récepteur 1 susceptible de tourner alternativement dans les deux sens, en réponse à la rotation d'un arbre de manœuvre 2.

Dans l'exemple représenté, le mécanisme d'assistance D est prévu pour une direction de véhicule automobile et l'organe récepteur 1 est formé par un arbre monté rotatif dans le carter C du mécanisme et portant un pignon qui coopère avec une crémaillère 3 de direction.

L'arbre 1 est immobilisé axialement par rapport au carter C tout en pouvant tourner librement.

Le mécanisme D comprend un moteur M, de préférence un moteur électrique, prévu pour tourner dans les deux sens. Des moyens de démultiplication T, formés par un train d'engrenages 4, sont prévus pour réduire la vitesse de rotation du moteur M pour l'entraînement de l'organe récepteur 1.

Deux embrayages $E_1$, $E_2$ sont prévus et associés, respectivement, à chaque sens de rotation.

Des moyens de commande F sont prévus pour mettre en action l'un des embrayages selon le sens et l'amplitude du couple exercé sur l'arbre de manœuvre 2 de sorte que l'organe récepteur 1 soit entraîné par le moteur M et les moyens de démultiplication T dans le sens souhaité, par l'intermédiaire de l'embrayage.

Chaque embrayage $E_1$, $E_2$ est lié en rotation, à l'arbre récepteur 1, par l'intermédiaire d'un moyen d'accouplement unidirectionnel $R_1$, $R_2$, agencé de manière à assurer l'entraînement en rotation de l'arbre récepteur 1 à partir de l'embrayage et non pas l'inverse.

Ces moyens d'accouplement unidirectionnel $R_1$, $R_2$, peuvent être constitués, par exemple, par deux roues libres, disposées de manière à travailler suivant des sens de rotation opposés.

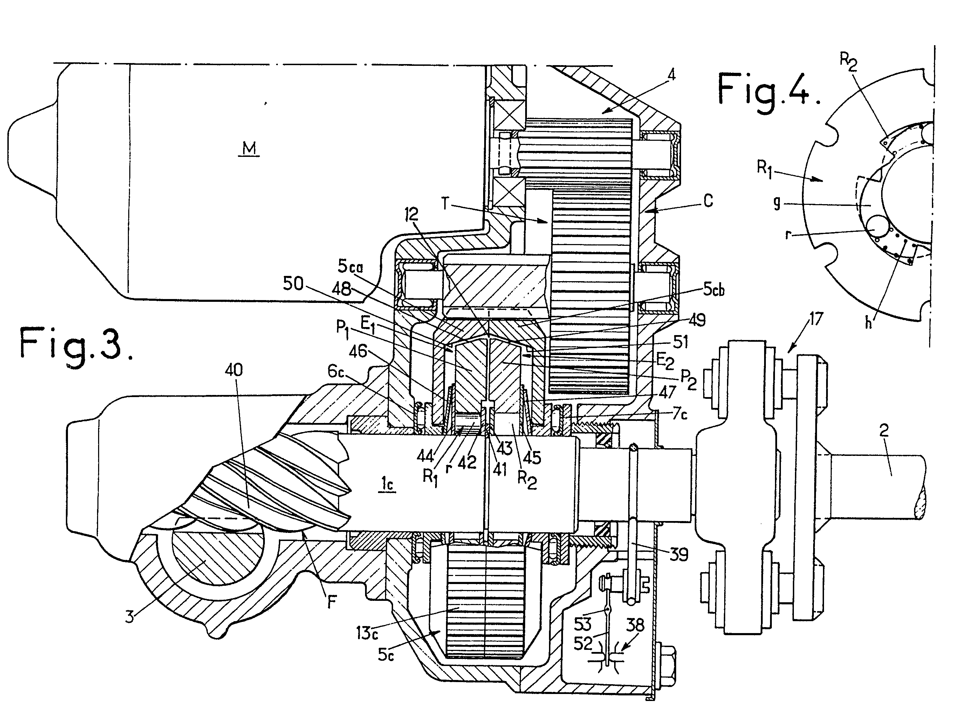

Comme visible sur la figure 4, la roue libre $R_1$ est du type à rouleaux r sollicités par des moyens élastiques h pour porvoquer un coincement dans le sens approprié, dans un logement g, de dimension radiale décroissante et limité par deux parties pouvant tourner l'une par rapport à l'autre. La roue libre $R_2$, du même type, est disposée de manière à fonctionner suivant le sens de rotation opposé à celui de fonctionnement de $R_1$.

Selon le mode de réalisation de la fig. 1, où l'organe récepteur 1 est immobilisé axialement par rapport au carter C, le train d'engrenages 4 comprend, à sa sortie une roue dentée 5 coaxiale à l'organe récepteur 1 et montée coulissante axialement sur cet organe 1.

Les embrayages $E_1$, $E_2$ sont prévus de part et d'autre de cette roue dentée 5. Chaque embrayage $E_1$, $E_2$ comporte un plateau récepteur $P_1$, $P_2$, écarté axialement de la roue dentée 5 lorsque celle-ci occupe sa position médiane, de manière à lui laisser la possibilité de coulisser. Ces plateaux $P_1$ $P_2$ sont montés sur l'arbre 1 par l'intermédiaire des roues libres $R_1$, $R_2$; des moyens d'arrêt formés par des butées axiales 6, 7 à rouleaux sont prévus pour empêcher le coulissement des plateaux $P_1$, $P_2$. La butée 7 est en appui contre un épaulement 8 de l'organe 1 tandis que la butée 6 est en appui contre une bague élastique 9 ancrée dans une gorge de la périphérie extérieure de l'organe 1.

Des éléments de friction coulissants formés par des disques 10, 11, sont empilés alternativement et reliés en rotation, respectivement, aux plateaux $P_1$, $P_2$ et à la roue dentée 5. L'empilage des éléments de friction 10, 11 est serré, lors du déplacement axial de la roue dentée 5, entre un côté de cette roue dentée et le plateau récepteur $P_1$ ou $P_2$ correspondant. L'embrayage est alors assuré et le plateau $P_1$ ou $P_2$ est entraîné en rotation par la roue dentée 5. Ce plateau, lui-même, entraîne en rotation l'arbre 1 par l'intermédiaire de la roue libre $R_1$ ou $R_2$.

La roue dentée 5 est creuse et formée de deux parties 5a, 5b assemblées l'une à l'autre de manière démontable, notamment par des vis, et délimitant un volume intérieur 12 à l'intérieur duquel sont placés les moyens de commande F des embrayages $E_1$, $E_2$.

La partie 5a de la roue dentée 5 comporte, sur sa périphérie extérieure, les dents 13 formant pignon et s'étendant axialement de part et d'autre du plan moyen de la roue 5; la forme de la section transversale de cette partie 5a est visible sur la fig. 1. L'autre partie 5b constitue, en quelque sorte, un flasque creux venant fermer le volume 12.

Les moyens de commande F comprennent un axe transversal 14 liè en translation axiale à un embout 15, lui-même coaxial à l'organe récepteur 1; cet embout 15 est monté libre en coulissement par rapport à l'organe récepteur dans un alésage borgne 16 prévu dans cet organe 1, du côté tourné vers l'arbre de manœuvre 2.

Cet embout 15 fait saillie, hors de l'alésage 16, en direction de l'arbre 2.

L'embout 15 est lié en rotation à l'arbre de manœuvre 2 par un accouplement 17, notamment à manchons élastiques, autorisant un coulissement axial de l'embout 15 par rapport à l'arbre 2. Cet accouplement 17 se compose, comme visible sur la figure 1, d'un plateau 17a solidaire de l'arbre 2 et muni de doigts 18 régulièrement répartis sur sa périphérie. Ces doigts 18 s'étendent parallèlement à l'axe de l'arbre 2 et traversent librement en coulissement des douilles 19 montées dans des manchons en matière élastomère 20 qui sont eux-mêmes logés dans des trous prévus sur la périphérie d'un deuxième plateau 17b solidaire en rotation et en translation de l'embout 15. Le couple de rotation est transmis par les doigts 18 qui, du fait de leur coulissement possible dans les douilles 19 laissent une liberté de mouvement axial à l'embout 15.

Des moyens élastiques de rappel sont prévus entre l'embout 15 et l'organe récepteur 1 pour ramener l'embout dans sa position moyenne. Ces moyens de rappel comprennent un ressort en hélice 21 disposé autour de l'embout et travaillant en compression entre deux rondelles 22, 23 montées sur l'embout 15. La rondelle 22, du côté opposé à l'arbre 2, vient en butée contre un épaulement 24 de l'embout 15, mais peut coulisser sur cet embout, dans le sens opposé. La rondelle 23 est arrêtée, du côté de l'arbre 2, par une bague élastique fendue 25 ancrée dans une gorge de l'embout 15; une entretoise de réglage 26 peut être prévue entre la rondelle 23 et la bague 25. La rondelle 23 peut coulisser sur l'embout 15 dans le sens opposé.

Lorsque l'embout 15 se déplace dans le sens qui l'éloigne de l'arbre 2, la rondelle 22 vient en appui contre et est arrêtée axialement par un épaulement 27 prévu dans l'alésage intérieur de l'organe 1; la rondelle 23 elle, dans ce déplacement, est entraînée par la bague 25.

Lorsque l'embout 15 se déplace dans le sens qui le rapproche de l'arbre 2, la rondelle 23 est arrêtée par une bague élastique fendue 28 ancrée dans une gorge prévue à l'intérieur de l'alésage de l'arbre 1, tandis que, lors de ce mouvement, la rondelle 22 est entraînée par l'épaulement 24.

On voit que quel que soit le sens du mouvement de l'embout 15, par rapport à l'arbre 2, le ressort 21 est comprimé et exerce un effort de rappel vers la position moyenne.

Le diamètre intérieur de la bague 28 est de préférence supérieur au diamètre extérieur de la bague 25 de telle sorte que l'amplitude de la course possible pour l'embout 15 ne soit pas limitée par la venue en butée de ces deux bagues.

L'axe transversal 14 est engagé dans un trou diamétral 29 de l'embout 15 et traverse, de part et d'autre de l'embout, deux lumières 30, 31, prévues dans la paroi de l'organe récepteur 1 qui entoure l'alésage 16. Ces lumières 30, 31 sont limitées par des parois en forme de rampes 32 (fig. 2) inclinées par rapport à la direction longitudinale.

L'axe 14 est équipé, de part et d'autre de l'embout 15, de deux galets 33, 34, propres à coopérer, respectivement, avec les lumières 30, 31.

Chaque extrémité de l'axe 14 est serrée, suivant la direction longitudinale de l'arbre 2, entre deux rondelles 35a, 35b engagées autour de l'organe récepteur 1 et situées de part et d'autre de l'axe 14 (voir fig. 2). Les deux faces en regard des rondelles comportent des empreintes concaves telles que I (fig. 2), diamétralement opposées, propres à être placées l'une en face de l'autre et à recevoir les extrémités de l'axe 14. Les rondelles 35a, 35b sont poussées contre l'axe 14 par des rondelles élastiques déformables 36, 37, agissant comme des ressorts et prenant appui contre les parties 5a, 5b de la roue dentée 5.

La commande de la mise en marche du moteur électrique M dans le sens de rotation approprié est assurée par un contact 38 commandé par un bras ou une épingle 39, schématiquement représenté, lié en translation à l'embout 15. Le contact 38 est à trois positions, à savoir une position neutre et deux positions de travail différentes correspondant à la rotation du moteur M dans deux sens différents; une position travail du contact 38 correspond au déplacement de l'embout 15 vers l'arbre 2 et l'autre position de travail correspond au déplacement de l'embout 15 en sens inverse.

Le fonctionnement du mécanisme d'assistance rotative de la figure 1 est le suivant.

Lorsque l'arbre de manœuvre 2 est actionné dans un sens, le couple de manœuvre est transmis, par l'accouplement 17, à l'embout 15 puis, de cet embout, à l'organe récepteur 1 par l'intermédiaire de l'axe 14 et des galets 33, 34 qui coopèrent avec les lumières 30, 31.

Du fait de l'inclinaison des parois 32, la transmission du couple s'accompagne d'une composante axiale agissant sur l'organe récepteur 1. Cet organe 1, bloqué axialement, reste immobile en translation, tandis que l'embout 15, sous l'effet de cette composante, se déplace dans le sens correspondant en comprimant le ressort 21.

L'axe 14 et les rondelles 35a, 35b accompagnent l'embout 15 lors de son déplacement axial. Les rondelles 35a, 35b poussent la roue dentée 5, mobile axialement, par l'intermédiaire des rondelles 36 ou 37.

Les couronnes de friction 10, 11 de l'embrayage correspondant sont alors serrées entre la roue dentée 5 et le plateau récepteur correspondant $P_1$ ou $P_2$, immobilisé axialement.

En outre, le bras 39 ayant agi sur le contact 38, le moteur M a été mis en marche, et l'embrayage, assuré par les couronnes de friction 10, 11 serrées les unes contre les autres, permet l'entraînement de l'organe récepteur 1 par le train d'entrenages 4 et le moteur M dans le sens approprié.

Cet entraînement s'effectue par l'intermédiaire de la roue libre $R_1$ ou $R_2$ disposée de telle sorte que l'organe récepteur 1 puisse être entraîné par le plateau $P_1$ ou $P_2$ de l'embrayage qui a été mis en action.

Par contre, la roue libre $R_1$, $R_2$ empêche l'inverse c'est-à-dire l'entraînement par l'organe récepteur 1 du plateau $P_1$ ou $P_2$ de l'embrayage mis en action.

L'amplitude du déplacement axial de l'embout 15 dépend, notamment, de la valeur du couple exercé sur l'arbre 2, de la force du ressort 21, et de l'inclinaison des rampes 32. Le contact 38 et le bras 39 peuvent être réglés de manière à assurer la mise en marche du moteur M à partir d'un seuil déterminé (de l'amplitude) du couple appliqué à l'arbre 2.

Lorsque le moteur M est à l'arrêt, l'entraînement de l'organe récepteur 1 par l'arbre de manœuvre 2 s'effectue sans entraînement du train d'engrenages 4 ni du moteur M.

En effet, même si le souple appliqué à l'arbre 2 est suffisant pour provoquer le serrage des couronnes de friction 10 et 11 et la mise en action de l'un des embrayages $E_1$, $E_2$, et cela sans que le moteur M se soit mis en marche (par exemple par suite d'une défaillance du contact de commande 38 ou autre incident) le plateau récepteur $P_1$ ou $P_2$ de l'embrayage concerné ne sera pas entraîné par l'organe récepteur 1 du fait de la roue libre $R_1$ ou $R_2$ empêchant un tel entraînement.

En se reportant à la figure 3, on peut voir une variante de réalisation du mécanisme d'assistance rotative selon l'invention.

Les éléments identiques ou jouant des rôles semblables à des éléments déjà décrits avec référence á la figure 1, sont désignés par les mêmes références numériques éventuellement suivis de la lettre c sans que leur description soit reprise en détail.

Le moteur M est toujours prévu pour tourner dans les deux sens de rotation. Le train d'engrenages 4 comporte également à sa sortie une roue dentée 5c creuse, formée par deux parties 5ca et 5cb symétriques l'une de l'autre par rapport à un plan moyen orthogonal à l'axe de l'arbre 2. Chaque partie de la roue 5c comporte, sur sa périphérie extérieure, des portions de dents qui viennent les unes en face des autres pour former les dents 13c.

La roue dentée 5c est immobilisée axialement par rapport au carter C par des butées axiales à rouleaux 6c, 7c.

L'organe récepteur 1c, par contre, est monté libre en couilissement axial par rapport au carter C. Cet organe récepteur 1c comprend des moyens d'engrenage formés par des filets 40 de vis inclinés par rapport à la direction axiale, propres à coopérer avec la denture d'une crémaillère 3 transversale. La coopération des filets inclinés 40 et des dents de la crémaillère crée une réaction axiale en réponse à l'exercice d'un couple de rotation sur l'organe récepteur 1c. La roue dentée 5c est montée libre en rotation sur l'arbre récepteur 1c.

Le plateau récepteur $P_1$, $P_2$ de chaque embrayage $E_1$, $E_2$, est disposé dans le volume intérieur 12 de la roue 5c. Le plateau $P_1$ est lié en rotation à l'organe 1c par la roue libre $R_1$ disposée de manière à assurer l'entraînement de l'organe 1c à partir du plateau $P_1$ pour un premier sens de rotation. Le plateau $P_2$ est propre à entrainer en rotation l'organe récepteur 1c, dans le sens de rotation opposé, par l'intermédiaire de la roue libre $R_2$ disposée de manière appropriée.

Les plateaux $P_1$, $P_2$ sont liés en translation à l'arbre 1c par l'intermédiaire d'une bague élastique 41 fendue ancrée dans une gorge extérieure de l'organe 1c et disposée entre les plateaux $P_1$, $P_2$.

Des rondelles 42, 43, servant d'entretoises, sont placées entre la bague 41 et les faces transversales d'évidements prévus dans les plateaux, $P_1$, $P_2$, et contre les roues libres $R_1$, $R_2$.

Des rondelles plates 44, 45 sont prévues contre les faces extérieures des plateaux $P_1$, $P_2$; des ressorts formés par des rondelles tronconiques élastiques déformables 46, 47 sont placés en appui contre les butées 6c, 7c suivant leur diamètre intérieur et contre les rondelles plates 44, 45 suivant leur diamètre extérieur. Les rondelles déformables 46, 47 assurent le serrage de la bague 41, entre les plateaux $P_1$, $P_2$.

Les surfaces de friction des embrayages peuvent être constituées par des surfaces tronconiques 48, 49 prévues respectivement à l'extérieur des plateaux $P_1$, $P_2$, et propres à coopérer avec des surfaces tronconiques complémentaires 50, 51 prévues à l'intérieur de la roue dentée 5c. Selon une autre possiblilité, on pourrait prévoir des éléments de friction semblables aux couronnes 10, 11 de la figure 1, montés respectivement sur les plateaux de l'embrayage et dans la roue 5c, et liés en rotation, respectivement, aux plateaux et à la roue dentée.

L'accouplement 17, permet, comme dans le cas de la figure 1, un coulissement axial et donc le déplacement de l'organe récepteur 1c. Le bras 39 agit sur le contact de commande 38 du moteur M par l'intermédiaire d'un levier 52 articulé sur un point 53 fixe par rapport au carter C.

Le fonctionnement du mécanisme d'assistance rotative représenté sur la figure 3 résulte immédiatement des explications précédentes.

Lorsqu'un couple est exercé sur l'arbre de manœuvre 2 ce couple est transmis à l'organe récepteur 1c qui va tourner et entraîner la crémaillère 3. La coopération des dents inclinées 40 et de la crémaillère engendre une composante axiale sur l'organe 1c qui coulisse longitudinalement, dans le sens correspondant à cette composante. L'organe récepteur 1c entraîne, lors de ce déplacement axial, par l'intermédiaire de la bague 41, le plateau $P_1$ ou $P_2$ à l'encontre du ressort de rappel formé par la rondelle élastique déformable 46 ou 47.

Lorsque le couple exercé sur l'arbre de manœuvre 2 est suffisant, le déplacement du plateau $P_1$ ou $P_2$ est tel qu'il vient en appui contre la roue dentée 5c par les surfaces 48 ou 49. Par ailleurs, le contact électrique 38 commandé par le bras 39, a mis en marche le moteur M dans le sens approprié.

Le plateau $P_1$ ou $P_2$, venu au contact de la roue dentée 5c est entraîné en rotation par cette dernière, laqualle est elle-même entraînée par le moteur M et le train d'engrenage 4. La roue libre $R_1$ ou $R_2$ assure l'entraînement de l'organe récepteur 1c, à partir du plateau $P_1$ ou $P_2$, dans le sens approprié pour assister le couple de manœuvre. L'autre plateau $P_2$ ou $P_1$ se trouve débrayé.

Si le moteur M reste à l'arrêt, pour une raison quelconque, il est possible d'entraîner l'organe récepteur 1c, à partir de l'arbre de manœuvre 2, sans entraîner le plateau récepteur $P_1$ ou $P_2$, ni le train d'engrenage 4 ni le moteur M même si le couple exercé est suffisant pour provoquer l'embrayage puisque la roue libre $R_1$ ou $R_2$ associée au plateau $P_1$ ou $P_2$ embrayé ne provoque pas l'entraînement en rotation de ce plateau par l'organe récepteur 1c.

L'invention permet donc d'entraîner l'organe récepteur par l'arbre de manœuvre sans avoir à vaincre l'inertie du train d'engrenages et du moteur, lorsque ce dernier est à l'arrêt.

Suivant un autre mode de réalisation possible, le moteur M est prévu pour tourner uniquement dans un sens. Les moyens de démultiplication de la vitesse du moteur comprennent alors deux trains d'engrenages, dont l'un comporte un pignon de plus que l'autre de telle sorte que les deux roues de sortie des trains d'engrenages tournent en sens inverse, avec la même vitesse absolue. Les embrayages $E_1$, $E_2$, dont les plateaux récepteurs $P_1$, $P_2$ sont montés sur l'organe récepteur par l'intermédiaire des roues libres $R_1$, $R_2$ travaillant en sens opposé, sont alors associés respectivement aux deux roues de sortie des deux trains d'engrenages.

Selon une première possibilité, les deux roues de sortie dentées peuvent être montées libres en coulissement axial par rapport au carter, tandis que l'organe récepteur est immobilisé en coulissement par rapport à ce carter; les moyens de commande de l'embrayage sont propres à déplacer axialement les roues dentées pour la mise en action de l'embrayage approprié.

Selon une autre possibilité, les deux roues de sortie sont immobilisées axialement tandis que l'organe récepteur est monté avec possibilité de coulissement axial, les plateaux récepteurs des embrayages étant liés an translation à cet organe récepteur.

## Revendications

1. Mécanisme d'assistance rotative propre á être accouplé à un organe récepteur (1, 1c) susceptible de tourner alternativement dans les deux sens, en réponse à la rotation d'un arbre de manœuvre (2), notamment pour direction de véhicule, comprenant un moteur (M), des moyens de démultiplication (T) de la vitesse du moteur, et deux embrayages ($E_1$, $E_2$) associés, respectivement, à chaque sens de rotation, des moyens de commande des embrayages étant prévus pour mettre en action l'un des embrayages selon le sens et l'amplitude du couple exercé sur l'arbre de manœuvre de telle sorte que l'organe récepteur (1, 1c) soit entraîné par le moteur et les moyens de démultiplication dans le sens souhaité par l'intermédiaire de l'embrayage mis en action, caractérisé par le fait que chaque embrayage ($E_1$, $E_2$) est lié en rotation à l'organe récepteur (1, 1c) par l'intermédiaire d'un moyen d'accouplement inidirectionnel ($R_1$, $R_2$) agencé de manière à assurer l'entraînement en rotation de l'organe récepteur à partir de l'embrayage, mis en action et non pas l'inverse.

2. Mécanisme d'assistance selon la revendication 1, caractérisé par le fait que chaque moyen d'accouplement unidirectionnel est formé par une roue libre ($R_1$, $R_2$).

3. Mécanisme d'assistance selon la revendication 1 ou 2 dans lequel les moyens de démultiplication comprenent au moins un train d'engrenage qui comporte une roue dentée de sortie coaxiale à l'organe récepteur, caractérisé par le fait que cette roue dentée (5) est montée libre en coulissement axial par rapport au carter (C) tandis que l'organe récepteur (1) est immobilisé en coulissement axial par rapport à ce carter, les moyens de commande (F) de l'embrayage étant propres à déplacer axialement la ou les roues dentées pour assurer la mise en action de l'embrayage approprié.

4. Mécanisme selon la revendication 3, caractérisé par le fait que les moyens de commande de l'embrayage comprennent un axe transversal (14) solidaire d'un embout (15), coaxial à l'organe récepteur (1), et monté libre en coulissement par rapport à cet organe et par rapport à l'arbre de manœuvre, ledit axe (14) traversant radialement au moins une lumière (30, 31), en forme de rampe inclinée par rapport à la direction longitudinale, prévue dans l'arbre récepteur, des moyens élastiques de rappel (21) étant en outre prévus entre l'embout et l'organe récepteur, la coopération de l'axe (14) avec la lumière (30, 31), sous l'effet d'un couple exercé sur l'arbre de manœuvre (2), provoquant un coulissement axial de la roue dentée dans le sens approprié.

5. Mécanisme selon la revendication 4 dans lequel le moteur est prévu pour tourner dans les deux sens, les moyens de démultiplication comprenant un seul traind'engrenage qui comporte une seule roue dentée de sortie, caractérisé par le fait que les embrayages ($E_1$, $E_2$) sont prévus de part et d'autre de cette roue dentée (5).

6. Mécanisme selon la revendication 5 caractérisé par le fait que la roue dentée (5) est creuse et que les moyens de commande (F) de l'embrayage sont disposés dans le volume intérieur (12) de cette roue.

7. Mécanisme selon la revendication 1 ou 2 dans lequel les moyens de démultiplication comprennent au moins un train d'engrenage qui comporte une roue dentée de sortie coaxiale à l'organe récepteur, caractérisé par le fait que la roue dentée (5c) est immobilisée axialement par rapport au carter (C) tandis que l'organe récepteur (1c) est monté avec une possibilité de coulissement axial relativement à ce carter, les moyens de commande (F) de l'embrayage étant propres à déplacer axialement cet organe récepteur (1c) pour la mise en action de l'embrayage approprié.

8. Mécanisme solon la revendication 7 dans lequel le moteur est prévu pour tourner dans les deux sens, les moyens de démultiplication comprenant un seul train d'engrenage qui comporte une seule roue dentée de sortie coaxiale à l'organe récepteur, caractérisé par le fait que la roue dentée (5c) est creuse et que les embrayages ($E_1$, $E_2$) sont disposés dans le volume intérieur de cette roue dentée, les plateaux $P_1$, $P_2$ de ces embrayages étant liés en translation à l'organe récepteur (1c).

9. Mécanisme selon la revendication 7 ou 8, caractérisé par le fait que les moyens de commande (F) de l'embrayage comprennent des moyens d'engrenage (40) prévus entre l'organe récepteur (1c) et un organe à commander (3), propres à créer une réaction axiale, en réponse à l'exercice d'un couple, cette réaction axiale provoquant un déplacement de l'organe récepteur.

10. Mécanisme selon l'un quelconque des revendications 1 à 4, ou 7, dans lequel le moteur est prévu pour tourner dans un seul sens, les moyens de démultiplication comprenant deux trains d'engrenage, dont l'un comporte un pignon de plus que l'autre de manière à assurer, à sa sortie, un sens de rotation inverse de celui de la sortie de l'autre train, chaque train d'engrenage comportant une roue dentée de sortie coaxiale à l'organe récepteur, caractérisé par le fait que les deux embrayages ($E_1$, $E_2$) sont associés, respectivement, à chaque roue dentée de sortie d'un train d'engrenage.

## Patentansprüche

1. Dreh-Servoantriebseinrichtung zum Ankuppeln an ein Ausgangsorgan (1, 1c), welches durch eine entsprechende Drehbetätigung einer Betätigungsantriebswelle (2) wahlweise in beiden Drehrichtungen drehbar ist, insbesondere zum Lenken eines Fahrzeuges, mit einem Servomotor (M), mit Mitteln (T) zum Untersetzen der Drehgeschwindigkeit des Servomotors, und mit zwei Kupplungen ($E_1$, $E_2$), welche jeweils einer Drehrichtung zugeordnet sind, wobei Mittel zum

Betätigen der Kupplungen (E$_1$, E$_2$) vorgesehen sind, um jeweils eine der Kupplungen entsprechend der Richtung und dem Ausschlag des auf die Betätigungsantriebswelle ausgeübten Momentes zu aktivieren derart, dass das Ausgangsorgan (1, 1c) durch den Servomotor und die Untersetzungsmittel in der mittels der aktivierten Kupplung bestimmten Richtung angetrieben wird, dadurch gekennzeichnet, dass jede der Kupplungen (E$_1$, E$_2$) mit dem Ausgangsorgan (1, 1c) über eine Einwegkupplungseinrichtung (R$_1$, R$_2$) drehverbunden ist, die so ausgebildet sind, dass das Ausgangsorgan in der von der jeweiligen aktivierten Kupplung bestimmten Drehung angetrieben aktivierten Kupplung bestimmten Drehung angetrieben wird und nicht in der entgegengesetzten Drehung.

2. Servoantriebseinrichtung nach Anspruch 1, dadurch gekennzeichnet, dass jede Einwegkupplungseinrichtung durch einen Freilauf (R$_1$, R$_2$) gebildet ist.

3. Servoantriebseinrichtung nach Anspruch 1 oder 2, bei der die Untersetzungsmittel wenigstens eine Zahnradfolge umfassen, die ein mit dem Ausgangsorgan koaxiales Ausgangszahnrad aufweist, dadurch gekennzeichnet, dass dieses Zahnrad (5) axial frei verschiebbar in einem Gehäuse (C) angeordnet ist, während das Ausgangsorgan (1) bezüglich dieses Gehäuses (C) axial unverschiebbar ist, wobei die Mittel (F) zum Betätigen der Kupplung das oder die Zahnräder axial veschieben können, um die jeweils geeignete Kupplung zu aktivieren.

4. Servoantriebseinrichtung nach Anspruch 3, dadurch gekennzeichnet, dass die Mittel zum Betätigen der Kupplung eine Querachse (14) umfassen, die mit einem Wellenansatz (15) fest verbunden ist, welcher zum Ausgangsorgan (1) koaxial angeordnet und diesem Organ sowie der Betätigungsantriebswelle gegenüber frei verschiebbar ist, wobei die Querachse (14) wenigstens eine Öffnung (30, 31) radial durchsetzt, die die Form einer schräg zur Längsrichtung geneigten Rampe aufweist und in der Ausgangswelle ausgebildet ist, wobei ferner elastische Rückstellmittel (21) zwischen dem Wellenansatz (15) und dem Ausgangsorgan vorgesehen sind und wobei das Zusammenwirken der Querachse (14) mit der Öffnung (30, 31) unter der Wirkung eines auf die Betätigungsantriebswelle (2) aufgebrachten Momentes eine axiale Verschiebung des Zahnrades in der gewünschten Richtung verursacht.

5. Servoantriebseinrichtung nach Anspruch 4, bei der der Servomotor in beiden Drehrichtungen drehen kann und die Untersetzungsmittel eine einzige Zahnradfolge umfassen, die ein einziges Ausgangszahnrad aufweist, dadurch gekennzeichnet, dass die Kupplung (E$_1$, R$_2$) zu beiden Seiten dieses Zahnrades (5) angeordnet sind.

6. Servoantriebseinrichtung nach Anspruch 5, dadurch gekennzeichnet, dass das Zahnrad (5) hohl ausgebildet ist und dass die Mittel (F) zum Betätigen der Kupplung im Innenraum (12) dieses Zahnrades angeordnet sind.

7. Servoantriebseinrichtung nach Anspruch 1 oder 2, bei der die Untersetzungsmittel wenigstens eine Zahnradfolge umfassen, welche ein mit dem Ausgangsorgan koaxiales Ausgangszahnrad aufweist, dadurch gekennzeichnet, dass das Ausgangszahnrad (5c) bezüglich des Gehäuses (C) axial unbeweglich ist, während das Ausgangsorgan (1c) bezüglich dieses Gehäuses (C) axial verschiebbar montiert ist, wobei die Mittel (F) zum Betätigen der Kupplung das Ausgangsorgan (1c) axial verschieben können, um die jeweils geeignete Kupplung zu aktivieren.

8. Servoantriebseinrichtung nach Anspruch 7, bei der der Servomotor in beiden Drehrichtungen drehen kann und die Untersetzungsmittel eine einzige Zahnradfolge umfassen, welche ein einziges mit dem Ausgangsorgan koaxiales Ausgangszahnrad aufweist, dadurch gekennzeichnet, dass das Ausgangszahnrad (5c) hohl ausgebildet ist und dass die Kupplungen (E$_1$, E$_2$) im inneren Hohlraum dieses Zahnrades angeordnet sind, wobei die Kupplungsplatten (P$_1$, P$_2$) längsverschieblich mit dem Ausgangsorgan (1c) verbunden sind.

9. Servoantriebseinrichtung nach Anspruch 7 oder 8, dadurch gekennzeichnet, dass die Mittel (F) zum Betätigen der Kupplung Verzahnungen (40) zwischen dem Ausgangsorgan (1c) und einem davon anzutreibenden Teil (3) umfassen die unter der Wirkung eines aufgebrachten Momentes eine Axialkraft erzeugen, wobei diese Axialkraft eine Verschiebung des Ausgangsorgans bewirkt.

10. Servoantriebseinrichtung nach einem der Ansprüche 1 bis 4 oder 7, bei der der Servomotor nur in einer Drehrichtung drehen kann, wobei die Untersetzungsmittel zwei Zahnradfolgen umfassen, deren eine gegenüber der anderen ein zusätzliches Ritzel aufweist, so dass an ihrem Ausgang eine gegenüber dem Ausgang der anderen Zahnradfolge entgegengesetzte Drehrichtung gegeben ist, und wobei jede Zahnradfolge ein zum Ausgangsorgan koaxiales Ausgangszahnrad aufweist, dadurch gekennzeichnet, dass jede der beiden Kupplungen (E$_1$, E$_2$) jeweils einem Ausgangszahnrad einer Zahnradfolge zugeordnet ist.

**Claims**

1. A rotary assistance mechanism adapted to be coupled to a driven member (1, 1c) capable of rotating alternately in both directions, in response to the rotation of a drive shaft (2), particularly for vehicle steering, comprising a motor (M), means (T) for reducing the speed of the motor and two clutches (E$_1$, E$_2$) associated respectively with each rotational direction, means for controlling the clutches being provided so as to bring into action one of the clutches depending on the direction and the magnitude of the torque exerted on the drive shaft so that the driven member (1, 1c) is driven by the motor and the reduction means in the desired direction through the energized clutch, characterized by the fact that each clutch (E$_1$, E$_2$) is connected for rotation to the driven member through a unidirectional coupling (R$_1$, R$_2$) arranged so as to ensure rotation of the driven member from the actuated clutch and not the reverse.

2. The assistance mechanism according to claim 1, characterized by the fact that each unidirectional coupling means is formed by a free wheel ($R_1$, $R_2$).

3. The assistance mechanism according to claim 1 or 2, wherein the reduction means comprise at least one gear train which has a toothed output wheel coaxial with the driven member, characterized by the fact that the toothed wheel (5) is mounted for free axial sliding with respect to the casing (C) whereas the driven member (1) is secured against axial sliding with respect to the casing, the means (F) for controlling the clutch being adapted to move axially the toothed wheel or wheels so as to bring the appropriate clutch into action.

4. The mechanism according to claim 3, characterized by the fact that the means for controlling the clutch comprise a transverse shaft (14) fast with an end-piece (15), coaxial with the driven member (1), and mounted freely sliding with respect to the member and with respect to the drive shaft, said shaft (14) passing radially through at least one aperture (30, 31) in the form of a ramp inclined with respect to the longitudinal direction, provided in the driven shaft, resilient return means (21) being further provided between the end-piece and the driven member, the cooperation of said shaft (14) with the aperture (30, 31), under the effect of a torque applied to the drive shaft (2), causing axial sliding of the toothed wheel in the appropriate direction.

5. The mechanism according to claim 4, wherein the motor is provided for rotation in both directions, the reduction means comprising a single gear train which comprises a single toothed output whell, characterized by the fact that the clutches ($E_1$, $E_2$) are provided on each side of the toothed wheel.

6. The mechanism according to claim 5, characterized by the fact that the toothed wheel (5) is hollow and that the means (E) for controlling the clutch are disposed in the inner volume (12) of said wheel.

7. The mechanism according to claim 1 or 2, wherein the reduction means comprise at least one gear train which includes a toothed output wheel coaxial with the driven member, characterized by the fact that the toothed wheel (5c) is secured against axial movement with respect to the casing (C) whereas the driven member (1c) is mounted with possibility of axial sliding relative to said casing, the means (F) for controlling the clutch being adapted to move the driven member (1c) axially for bringing into action the appropriate clutch.

8. The mechanism according to claim 7, wherein the motor is arranged for rotation in both directions, the reduction means comprising a single gear train which comprises a single toothed output wheel coaxial with the dirven member, characterized by the fact that the toothed wheel (5c) is hollow and that the clutches ($E_1$, $E_2$) are disposed in the inner volume of the toothed wheel, the plates ($P_1$, $P_2$) of these clutches being connected for translation along with the driven member (1c).

9. The mechanism according to claim 7, characterized by the fact that the means (F) for controlling the clutch comprise gear means (40) provided between the driven member (1c) and a member (3) to be controlled, adapted to create an axial reaction, in response to the application of a torque, this axial reaction causing a movement of the driven member.

10. The mechanism according to any one of claims 1–4, or 7, wherein the motor is provided for rotation in a single direction, the reduction means comprising two gear trains, one of which comprises a pinion more than the other so as to ensure, at its output, a rotational direction the reverse of that of the output of the other train, each gear train comprising a toothed output wheel coaxial with the driven member, characterized by the fact that the two clutches ($E_1$, $E_2$) are associated respectively with the toothed output wheel of a gear train.

Fig.2.

Fig.1.

Fig.3.

Fig.4.

0 081 025